Europäisches Patentamt

European Patent Office

Office européen des brevets

(11) Veröffentlichungsnummer: **0 493 769 B1**

## EUROPÄISCHE PATENTSCHRIFT

(45) Veröffentlichungstag der Patentschrift: **25.10.95**

(21) Anmeldenummer: **91122069.7**

(22) Anmeldetag: **21.12.91**

Die Akte enthält technische Angaben, die nach dem Eingang der Anmeldung eingereicht wurden und die nicht in dieser Patentschrift enthalten sind.

(51) Int. Cl.⁶: **C08F 210/02**, //(C08F210/02, 218:08,218:10)

(54) **Terpolymerisate des Ethylens, ihre Herstellung und ihre Verwendung als Additive für Mineralöldestillate.**

(30) Priorität: **29.12.90 DE 4042206**

(43) Veröffentlichungstag der Anmeldung:
**08.07.92 Patentblatt 92/28**

(45) Bekanntmachung des Hinweises auf die Patenterteilung:
**25.10.95 Patentblatt 95/43**

(84) Benannte Vertragsstaaten:
**AT BE CH DE DK ES FR GB IT LI NL SE**

(56) Entgegenhaltungen:
**EP-A- 0 054 138**
**EP-A- 0 217 602**
**EP-A- 0 271 738**
**EP-A- 0 295 727**
**DE-A- 2 047 355**

(73) Patentinhaber: **HOECHST AKTIENGESELL-SCHAFT**

**D-65926 Frankfurt am Main (DE)**

(72) Erfinder: **Reimann, Werner, Dr.**
**Am Kreyenbergshof 2a**
**W-4100 Duisburg (DE)**
Erfinder: **Feustel, Michael, Dr.**
**Freiherr-v.-Stein-Strasse 35**
**W-6233 Kelkheim (DE)**
Erfinder: **Hobes, John, Dr.**
**Ernastrasse 2b**
**W-4220 Dinslaken (DE)**

**Beschreibung**

Die vorliegende Erfindung betrifft Terpolymerisate, die außer Ethylen-Einheiten 5 bis 35 Gew.-% Vinylacetat und 1 bis 25 Gew.-% Neononansäurevinylester- oder Neodecansäurevinylester-Einheiten, d.h. solche Ester, die auf tertiären Carbonsäuren basieren, welche durch die Koch-Synthese aus Olefinen, CO und Wasser hergestellt werden, enthalten, eine im Dampfphasenosmometer unter Verwendung von Toluol als Lösungsmittel gemessene mittlere Molekularmasse ($\overline{M}_n$) von 500 bis 5000 g/mol und eine bei 140°C gemessene Schmelzviskosität von 20 bis 1000 mPa.s besitzen. Sie werden mit Erfolg zur Verbesserung der Fließfähigkeit von Mineralölen und Mineralöldestillaten eingesetzt.

Rohöle und durch Destillation von Rohölen gewonnene Mitteldestillate wie Gasöl, Dieselöl oder Heizöl enthalten je nach Herkunft der Rohöle unterschiedliche Mengen langkettiger Paraffine (Wachse) gelöst. Bei niedrigen Temperaturen scheiden sich diese Paraffine als plättchenförmige Kristalle ab, teilweise unter Einschluß von Öl. Hierdurch wird die Fließfähigkeit der Rohöle und der aus ihnen gewonnenen Destillate erheblich beeinträchtigt. Es treten Feststoffablagerungen auf, die häufig zu Störungen bei Gewinnung, Transport und Einsatz der Mineralölprodukte führen. So kommt es in der kalten Jahreszeit z.B. bei Dieselmotoren und Feuerungsanlagen zu Verstopfungen der Filter, die eine sichere Dosierung der Brennstoffe verhindern und schließlich in einer Unterbrechung der Kraftstoff- bzw. Heizmittelzufuhr resultieren. Auch das Fördern der Mitteldestillate durch Rohrleitungen über größere Entfernungen kann im Winter durch das Ausfallen von Paraffinkristallen beeinträchtigt werden.

Es ist bekannt, das unerwünschte Kristallwachstum durch geeignete Zusätze zu unterbinden und damit einem Anstieg der Viskosität der Öle entgegenzuwirken. Solche Zusätze, sie sind unter der Bezeichnung Stockpunktverbesserer bzw. Fließverbesserer bekannt, verändern Größe und Form der Wachskristalle und wirken damit einem Anstieg der Viskosität der Öle entgegen.

Das Fließ- und Kälteverhalten von Mineralölen und Mineralöldestillaten wird durch Angabe des Pour-Points (bestimmt nach DIN 51597) und des Cold-Filter-Plugging-Points (CFPP; bestimmt nach DIN 51 428) beschrieben. Beide Kenngrößen werden in °C gemessen.

Typische Fließverbesserer für Rohöl und Mitteldestillate sind Copolymerisate des Ethylens mit Carbonsäureestern des Vinylalkohols. So setzt man nach der DE 11 47 799 B1 Erdöldestillat-Treib- bzw. -Brennstoffen mit einem Siedebereich zwischen etwa 120 und 400°C öllösliche Mischpolymerisate aus Ethylen und Vinylacetat mit einem Molekulargewicht zwischen etwa 1.000 und 3.000 zu. Bevorzugt werden Mischpolymerisate, die etwa 60 bis 99 Gew.-% Ethylen und etwa 1 bis 40 Gew.-% Vinylacetat enthalten. Sie sind besonders wirksam, wenn sie durch radikalische Polymerisation in einem inerten Lösungsmittel bei Temperaturen von etwa 70 bis 130°C und Drücken von 35 bis 2.100 atü hergestellt wurden (DE 19 14 756 B2).

Andere als Fließverbesserer eingesetzte Polymerisate enthalten neben Ethylen und Vinylacetat z.B. Hexen-1 (vgl. EP 01 84 083 B1) oder Diisobutylen (vgl. EP 02 03 554 B1). Auch Mischpolymerisate aus Ethylen, Alkencarbonsäureester und/oder Vinylester und Vinylketon werden als Stockpunkterniedriger und zur Verbesserung des Fließverhaltens von Rohölen und Mitteldestillaten der Rohöle verwendet (vgl. EP 01 11 883 B1).

Die Wirksamkeit der bekannten Zusatzstoffe zur Verbesserung der Eigenschaften von Mineralölfraktionen ist u.a. abhängig von der Herkunft des Mineralöls aus dem sie gewonnen wurden und damit insbesondere von dessen Zusammensetzung. Additive, die zur Einstellung bestimmter Eigenschaftswerte von Fraktionen eines Rohöls hervorragend geeignet sind, können daher bei Destillaten von Rohölen anderen Ursprungs zu völlig unbefriedigenden Ergebnissen führen.

Inzwischen stehen Additive zur Verfügung, die einen breiten Anwendungsbereich haben, d.h. die Paraffinabscheidung aus Mineralölen und Mineralölfraktionen unterschiedlicher Herkunft wirksam unterbinden. Dennoch gibt es Fälle, in denen sie sich als wenig oder gar nicht brauchbar erweisen, sei es, daß sie nur wenig zur Erhöhung der Fließfähigkeit in der Kälte beitragen, daß sie die Filtrierbarkeit von Mineralöldestillaten oberhalb des Cloud Points beeinträchtigen und/oder nur unzulänglich zu handhaben sind. Die Ursachen hierfür sind vielfältig; die Erschließung neuer Rohstoffe und die geänderte Verarbeitung der Primärprodukte seien als Beispiele genannt.

Es bestand daher die Aufgabe, neue Additive zur Verbesserung der Fließfähigkeit solcher Erdölarten oder Erdölfraktionen zu entwickeln, bei denen die Additive des Standes der Technik wenig oder gar nicht wirksam sind. Sie sollen zudem eine ausreichende Filtrierbarkeit von Erdöldestillaten oberhalb des Cloud Points gewährleisten und ohne Probleme anwendbar sein.

Gegenstand der Erfindung sind Terpolymerisate, die außer Ethylen-Einheiten 5 bis 35 Gew.-% Vinylacetat-Einheiten und 1 bis 25 Gew.-% Neononansäurevinylester- oder Neodecansäurevinylester-Einheiten enthalten und eine mittlere Molekularmasse ($\overline{M}_n$) von 500 bis 5.000 g . Mol$^{-1}$ besitzen.

EP 0 493 769 B1

Ein weiterer Gegenstand der Erfindung ist die Verwendung der vorstehend beschriebenen Terpolymerisate zur Verbesserung der Fließfähigkeit von Mineralölen und insbesondere Mineralöldestillaten.

Überraschenderweise haben sich die Terpolymerisate der Erfindung hervorragend zur Verbesserung der Fließfähigkeit auch solcher Mineralöle und Mineralöldestillate bewährt, deren Fließverhalten mit den Additiven des Standes der Technik nicht beeinflußt werden konnte.

Grundsätzlich können die erfindungsgemäßen Terpolymerisate als Fließverbesserer sowohl in Rohölen als auch in den durch Destillation gewonnenen Weiterverarbeitungsprodukten des Rohöls eingesetzt werden. Bevorzugt ist jedoch ihre Verwendung in Mineralöldestillaten, insbesondere Mineralölmitteldestillaten. Hierunter werden Kohlenwasserstofffraktionen verstanden, die zwischen 150 und 400 °C sieden. Beispiele für derartige Rohöldestillate sind Petroleum, leichte Heizöle und Dieselkraftstoff. Von besonderer Bedeutung sind Mitteldestillate wie Heizöl EL und Dieselkraftstoff.

Neben der Zusammensetzung ist wesentliches Kriterium der neuen Terpolymerisate die mittlere Molekularmasse ($\overline{M}_n$). Sie wird im Dampfphasenosmometer unter Verwendung von Toluol als Lösungsmittel gemessen und beträgt 500 bis 5.000 g . $mol^{-1}$. Als Fließverbesserer werden bevorzugt Terpolymerisate mit einer mittleren Molekularmasse von 1000 bis 3000 g . $mol^{-1}$ eingesetzt.

Die bei 140 °C gemessene Schmelzviskosität der erfindungsgemäßen Terpolymerisate beträgt 20 bis 1000 mPa . s, als Fließverbesserer besonders geeignet sind Terpolymerisate mit einer Schmelzviskosität (bei 140 °C) von 25-500, insbesondere 40 bis 300 mPa . s.

Zur Herstellung der erfindungsgemäßen Terpolymerisate aus Ethylen, Vinylacetat und Neononansäurevinylester bzw. Neodecansäurevinylester geht man von Gemischen der Monomeren aus. Die Vinylester der Neononansäure und der Neodecansäure sind Handelsprodukte, die z.B. durch Umsetzung der ihnen zugrundeliegenden Säuren mit Acetylen erhalten werden. Neononansäure und Neodecansäure (beide Bezeichnungen sind Handelsnamen, entsprechende Produkte befinden sich auch unter dem Namen Versaticsäure 9 bzw. Versaticsäure 10 auf dem Markt) sind tertiäre Carbonsäuren, die man durch Koch-Synthese, d.h. Umsetzung von Olefinen mit Kohlenmonoxid und Wasser, herstellt.

Die Ausgangsstoffe werden nach bekannten Verfahren (vgl. hierzu z.B. Ullmans Encyclopädie der Technischen Chemie, 4. Auflage, Bd. 19, Seiten 169 bis 178) in Gegenwart von Initiatoren wie Sauerstoff, Peroxiden, Hydroperoxiden oder Azoverbindungen polymerisiert. Die Umsetzung der Monomeren erfolgt bei Drücken zwischen 50 und 700 MPa und bei Temperaturen zwischen 100 und 350 °C. Bevorzugt werden Drücke von 150 bis 300 MPa und Temperaturen zwischen 120 und 325 °C. Die mittlere Molekularmasse $\overline{M}_n$ der Terpolymerisate wird durch Variation der Reaktionsparameter Druck und Temperatur bei gegebener Zusammensetzung des Monomerengemisches und gegebenenfalls durch Zusatz eines Molekularmassenreglers eingestellt. Als Molekularmassenregler haben sich z.B. gesättigte oder ungesättigte Kohlenwasserstoffe, Aldehyde oder Ketone bewährt. Sie werden in einer Menge von 0,05 bis 10 Gew.-%, bezogen auf das Monomerengemisch, angewendet. Ein besonders geeigneter Molekularmassenregler ist Propionaldehyd. Um Polymerisate der beanspruchten Zusammensetzung zu erhalten, setzt man Monomerengemische ein, die außer Ethylen und gegebenenfalls einem Molekularmassenregler 5 bis 40 Gew.-% Vinylacetat und 1 bis 30 Gew.-% Neononansäurevinylester bzw. Neodecansäurevinylester enthalten. Mit dem gegenüber dem Terpolymerisat höheren Vinylesteranteil (sowohl der Neosäuren als auch der Essigsäure) im Monomerengemisch trägt man der unterschiedlichen Polymerisationsgeschwindigkeit der Monomeren Rechnung. Die Polymerisate fallen als farblose Schmelzen an, die bei Raumtemperatur zu wachsartigen Feststoffen erstarren.

Die Polymerisation wird in bekannten Hochdruckreaktoren, z.B. Autoklaven oder Rohrreaktoren, durchgeführt. Lösungsmittel wie aliphatische Kohlenwasserstoffe oder Kohlenwasserstoffgemische, Benzol oder Toluol können im Reaktionsgemisch enthalten sein, wenngleich sich die lösungsmittelfreie Arbeitsweise besonders bewährt hat. Bevorzugt führt man die Polymerisation in Rohrreaktoren durch.

Die erfindungsgemäßen Terpolymerisate werden Mineralöldestillaten in Form von Lösungen zugesetzt. Als Lösungsmittel geeignet sind aliphatische oder aromatische Kohlenwasserstoffe oder Kohlenwasserstoffgemische, z.B. Benzinfraktionen und insbesondere Kerosin. Durch die neuen polymeren Verbindungen in ihren rheologischen Eigenschaften verbesserte Mineralöldestillate enthalten 0,001 bis 2, vorzugsweise 0,005 bis 0,5 Gew.-% Terpolymerisat, bezogen auf das Destillat. Das Terpolymerisat kann allein oder auch zusammen mit anderen Additiven verwendet werden, beispielsweise mit Entwachsungshilfsmitteln, Korrosionsinhibitoren, Antioxidantien oder Schlamminhibitoren. Ebenso ist es möglich, Gemische der erfindungsgemäßen Terpolymerisate einzusetzen, deren Komponenten sich hinsichtlich ihrer Zusammensetzung und/oder ihrer mittleren Molekularmasse unterscheiden.

Die Herstellung der neuen Terpolymerisate und ihre Eigenschaften werden in den Beispielen 1 bis 18 beschrieben, Einzelheiten sind in Tabelle 1 zusammengefaßt. Die Beispiele 1 bis 16 betreffen Polymerisate, die Neononansäurevinylester, die Beispiele 17 und 18 solche, die Neodecansäurevinylester enthalten. Die

3

Verwendung der neuen Terpolymerisate als Additive für Mineralöldestillate ist in Tabelle 2 dargestellt. In Tabelle 3 sind die Ergebnisse der Filtrationsprüfung und in Tabelle 4, als Maßstab für ihre Handhabung, die Pour Points erfindungsgemäßer Terpolymerisate aufgeführt.

Die Beispiele erläutern die Erfindung lediglich, beschränken sie aber nicht auf die hier wiedergegebenen speziellen Ausführungsformen.

Herstellung von Ethylen-/Vinyl-acetat-/Neononansäurevinylester- bzw. Neodecansäurevinylester-Terpolymerisaten.

Ethylen, Vinylacetat und Neononansäurevinylester- bzw. Neodecansäurevinylester werden unter Zusatz von Propionaldehyd als Molekularmassenregler (Moderator), in einem Autoklaven polymerisiert. Hierzu wird das Monomerengemisch, dem als Initiator Bis(2-ethylhexyl)-peroxidicarbonat (EHP) oder tert.-Butylperoxipivalat (TBP) gelöst in Testbenzin (0,5 Gew.-% EHP bzw. TBP im Lösungsmittel) zugesetzt worden ist, unter Reaktionsdruck in den Reaktor eingespeist. Die Verweilzeit der Reaktanten im Autoklaven beträgt etwa 80 s.

In der nachfolgenden Tabelle 1 sind die Polymerisationsbedingungen, in Tabelle 1a die Eigenschaften der erhaltenen Terpolymerisate zusammengestellt.

Der Vinylacetatgehalt und der Gehalt an Neononansäure bzw. Neodecansäure wird durch Pyrolyse des Polymerisats bestimmt. Hierzu wird das Terpolymerisat bei 450°C in einem geschlossenen System unter Vakuum thermisch gespalten. Pyrolysat und Rückstand werden in Toluol gelöst. Die Essigsäure, als ein Spaltprodukt, wird durch mehrmaliges Ausschütteln mit heißem Wasser von der Neononansäure bzw. der Neodecansäure, die in der Toluolphase verbleiben, getrennt. Die vereinigten Wasserphasen und die Toluolphase werden nach Zusatz von 2-Propanol mit einer Lösung von KOH in Ethanol (0,1 mol KOH je Liter Lösung) potentiometrisch bis zum Äquivalenzpunkt titriert. Der KOH-Verbrauch für die Wasserphase entspricht dem Vinylacetatgehalt, der KOH-Verbrauch für die Toluolphase dem Neononansäure- bzw. Neodecansäurevinylestergehalt. Gegebenenfalls muß ein Blindwert für das Lösungsmittel auf dem gleichen Weg bestimmt und bei der Berechnung berücksichtigt werden.

Tabelle 1: Herstellung der Terpolymerisate

| Bei-spiel Nr. | Reak-tions-druck (MPa) | Reak-tions-tempe-ratur (°C) | Zusammensetzung des Reaktionsgemisches | | | | | Ausbeute (% bez. auf Einsatz) |
|---|---|---|---|---|---|---|---|---|
| | | | $C_2H_4$ | Vinyl-acetat | Neononansäure-(Neodecansäure-)vinylester (Gew.-% bez. auf Reaktionsgemisch) | Initiator (Gew.-ppm bez. auf Ethylen) | Moderator (Gew.-%, bez. auf Monomere) | |
| 1 | 150 | 230 | 63,8 | 9,6 | 24,7 | 40 | 1,9 | 19,4 |
| 2 | 150 | 230 | 73,0 | 14,6 | 10,0 | 55 | 2,4 | 16,9 |
| 3 | 150 | 230 | 63,1 | 15,0 | 19,7 | 140 | 2,1 | 19,7 |
| 4 | 150 | 230 | 68,0 | 19,6 | 10,2 | 75 | 2,2 | 18,1 |
| 5 | 150 | 230 | 63,2 | 19,8 | 15,0 | 75 | 2,1 | 20,0 |
| 6 | 150 | 230 | 68,4 | 24,8 | 4,5 | 300 | 2,2 | 18,4 |
| 7 | 150 | 230 | 63,7 | 24,7 | 9,6 | 350 | 2,1 | 19,1 |
| 8 | 150 | 230 | 59,0 | 24,3 | 14,8 | 400 | 1,9 | 19,3 |
| 9 | 150 | 230 | 63,5 | 29,4 | 4,8 | 300 | 2,3 | 19,8 |
| 10 | 150 | 230 | 58,9 | 29,4 | 9,6 | 350 | 2,1 | 20,6 |
| 11 | 150 | 230 | 53,7 | 29,6 | 14,8 | 400 | 2,0 | 20,8 |
| 12 | 200 | 160 | 66,1 | 24,0 | 4,1 | 190 | 5,9 | 9,2 |
| 13 | 200 | 160 | 61,5 | 23,8 | 9,2 | 225 | 5,5 | 10,3 |
| 14 | 200 | 160 | 57,0 | 23,5 | 14,3 | 265 | 5,2 | 11,4 |
| 15 | 200 | 160 | 61,1 | 28,3 | 4,6 | 225 | 6,0 | 9,8 |
| 16 | 200 | 160 | 56,4 | 28,2 | 9,2 | 265 | 6,3 | 11,5 |
| 17 | 160 | 230 | 61,9 | 31,7 | 4,5 | 300 | 1,9 | 20,1 |
| 18 | 160 | 230 | 59,6 | 30,4 | 7,9 | 350 | 2,1 | 20,7 |

EP 0 493 769 B1

**Tabelle 1a: Eigenschaften der Terpolymerisate**

Kennzeichnung der Polymerisate

| Beispiel Nr. | Vinylacetat (Gew.-%) | Neononansäure-(Neodecansäure-)vinylester (Gew.-%) | Viskosität bei 140°C (mPa.s) | Mn (g/mol) |
|---|---|---|---|---|
| 1 | 9,1 | 23,5 | 260 | 1812 |
| 2 | 12,5 | 9,7 | 240 | 1890 |
| 3 | 13,3 | 18,3 | 260 | 1789 |
| 4 | 19,4 | 9,5 | 270 | 1910 |
| 5 | 18,0 | 13,5 | 250 | 1877 |
| 6 | 23,6 | 4,6 | 240 | 1821 |
| 7 | 22,6 | 9,3 | 290 | 1971 |
| 8 | 21,7 | 13,5 | 270 | 1850 |
| 9 | 26,0 | 5,0 | 240 | 1767 |
| 10 | 25,9 | 9,7 | 270 | 1829 |
| 11 | 24,9 | 13,9 | 270 | 1948 |
| 12 | 23,3 | 5,5 | 45 | 1164 |
| 13 | 24,2 | 8,9 | 50 | 1195 |
| 14 | 23,7 | 13,6 | 55 | 1283 |
| 15 | 26,8 | 4,8 | 50 | 1274 |
| 16 | 24,9 | 9,1 | 45 | 998 |
| 17 | 28,1 | 3,8 | 200 | 1543 |
| 18 | 27,6 | 5,9 | 210 | 1615 |

Wirksamkeit der Terpolymerisate

In Tabelle 2 wird die Wirksamkeit der nach den Herstellungsbeispielen 1 bis 18 erhaltenen Ethylen-/Vinylacetat-/Neononansäure- bzw. Neodecansäurevinylester-Terpolymerisate als Additive für Mineralöle und Mineralöldestillate an Hand des CFPP-Tests (Kalt-Filter-Verstopfungspunkt-Test) beschrieben. Als Vergleich wird die Wirksamkeit eines handelsüblichen Ethylen-/Vinylacetat-Copolymerisats (EVA, mit 28,7 Gew.-% Vinylacetatgehalt) und eines ebenfalls handelsüblichen Ethylen-/Vinylacetat-/Diisobutylen-Terpolymerisats (EVA-DIB; 27,1 Gew.-% Vinylacetat- und 6 Gew.-% Diisobutylengehalt) wiedergegeben. Die Schmelzviskosität (bei 140°C) der Polymerisate beträgt 275 bzw. 320 mPa . s und ihre mittlere Molekularmasse 1790 bzw. 1920 g/mol. Die Durchführung des Tests erfolgt nach DIN 51428; sie ist auch in J. of the Inst. of Petr., Bd. 52, Juni 1966, Seiten 173 bis 185 publiziert.

Zur Prüfung werden 7 Mitteldestillate A bis G eingesetzt, denen die Polymerisate als 50 Gew.-%ige Dispersion in Kerosin zugesetzt wird. Die Mitteldestillate A bis G sind durch folgende Eigenschaften gekennzeichnet:

Charakteristik der Mitteldestillate

| Mitteldestillat | Siedeanalyse ASTM D 86 (°C) | | | | CFPP-Blindwert (°C) |
|---|---|---|---|---|---|
| | Siedeanfang | 20 | 90 | Siedeende | |
| | | Vol.-% | | | |
| A | 184 | 213 | 341 | 363 | - 5 |
| B | 160 | 245 | 358 | 383 | - 3 |
| C | 160 | 200 | 313 | 343 | -13 |
| D | 160 | 210 | 318 | 353 | -14 |
| E | 160 | 229 | 333 | 366 | - 5 |
| F | 210 | 255 | 356 | 375 | 0 |
| G | 181 | 219 | 345 | 374 | - 6 |

Die Ergebnisse der Beispiele 1 bis 18 zeigen, daß die erfindungsgemäßen Terpolymerisate gegenüber den allgemein gebräuchlichen Ethylen-/Vinylacetat-Copolymerisaten eine deutlich verbesserte Wirksamkeit in Mitteldestillatfraktionen aufweisen.

Tabelle 2

| Wirksamkeit der Terpolymerisate (CFPP-Test) | | | | | | | |
|---|---|---|---|---|---|---|---|
| Polymerisat aus Beispiel Nr. | CFPP (°C) in Mitteldestillat | | | | | | |
| | A | B | C | D | E | F | G |
| Additivmenge (ppm) | 400 | 100 | 500 | 300 | 100 | 300 | 250 |
| 1 | -18 | -13 | -19 | -14 | -12 | - | - |
| 2 | -15 | -16 | -19 | -14 | -13 | - | - |
| 3 | -19 | -13 | -18 | -17 | -12 | - | - |
| 4 | -20 | - | - | - | - | - | - |
| 5 | -19 | -14 | -18 | -19 | -13 | - | - |
| 6 | -19 | -15 | -18 | -18 | -16 | - | - |
| 7 | -20 | - | - | - | - | - | - |
| 8 | -19 | -14 | -20 | -20 | -14 | - | - |
| 9 | -19 | - 9 | -18 | -19 | -16 | - 8 | -16 |
| 10 | -16 | - 5 | -18 | -18 | - 9 | -10 | -17 |
| 11 | -17 | - 4 | -19 | -17 | -14 | - 7 | -16 |
| 12 | -18 | -16 | -22 | -20 | -16 | - | - |
| 13 | -20 | - | - | - | - | - | - |
| 14 | -18 | - 6 | -19 | -25 | - 9 | - | - |
| 15 | -19 | -11 | -22 | -23 | -15 | - | - |
| 16 | -18 | - 5 | -26 | -23 | - 9 | - | - |
| 17 | -20 | - | - | - | - | - 7 | -16 |
| 18 | -18 | - | - | - | - | - 9 | -16 |
| EVA | -18 | - 7 | -17 | -18 | -13 | - 6 | -14 |
| EVA-DIB | -17 | -12 | -20 | -23 | - 8 | - 8 | -14 |

Löslichkeit der Terpolymerisate

In Tabelle 3 ist das Löslichkeitsverhalten der neuen Polymerisate zusammengestellt. Es wird wie folgt bestimmt: 400 ppm einer Dispersion des Polymerisats in Kerosin (50 Gew.-% Polymerisat, bezogen auf die Dispersion) werden bei 20°C 2 min. in das Testöl eingerührt, das durch die nachstehenden Kenndaten charakterisiert ist:

| Siedeanalyse (nach ASTM D 86; °C) | |
|---|---|
| Siedeanfang | 186 |
| 20 Vol-% | 256 |
| 90 Vol-% | 350 |
| Siedeende | 372 |
| Cloud Point (°C) | +3 |
| CFPP (°C) | -2 |
| Pour Point (°C) | -9 |

Darauf wird ein Prüfvolumen von 50 ml bei 30 kPa (300 mbar) über ein Whatman PTFE-Filter (⌀ 12 mm, Porenweite: 3 μm) filtriert und die Filtrationszeit bestimmt. Bei Filtrationszeiten >900 s wird alternativ das Filtratvolumen angegeben.

Tabelle 3

| Löslichkeit der Terpolymerisate | |
|---|---|
| | Filtrationszeit für 50 ml Testöl bei 20°C (s) |
| Blindwert (gemessen ohne Additiv) | 203 |
| Polymerisat (400 ppm) aus Beispiel | |
| 8 | 720 |
| 9 | 253 |
| 10 | 221 |
| 11 | 216 |
| 12 | >900 (verstopft nach 13 ml) |
| 13 | >900 (verstopft nach 18 ml) |
| 14 | 259 |
| 15 | >900 (verstopft nach 16 ml) |
| 16 | 501 |
| 17 | 400 |
| 18 | 391 |
| EVA | >900 (verstopft nach 18 ml) |
| EVA-DIB | >900 (verstopft nach 20 ml) |

Gegenüber handelsüblichen Produkten ist die Löslichkeit der neuen Polymerisate deutlich verbessert.

Handhabbarkeit der Terpolymerisate

Als Maßstab für die Handhabbarkeit der neuen Polymerisate dient ihr Pour Point, gemessen an einer Polymerisat/Kerosin-Dispersion (50 Gew.-% Polymerisat, bezogen auf die Dispersion) nach ISO 3016.

Tabelle 4

| Handhabbarkeit der Terpolymerisate | |
|---|---|
| Polymerisat aus Beispiel | Pour Point nach ISO 3016 50 %ig in Kerosin |
| 1 | + 24 |
| 2 | + 27 |
| 3 | + 12 |
| 4 | + 24 |
| 5 | + 12 |
| 6 | + 15 |
| 7 | + 15 |
| 8 | + 6 |
| 9 | + 3 |
| 10 | - 3 |
| 11 | -12 |
| 12 | + 18 |
| 13 | + 9 |
| 14 | - 9 |
| 15 | + 12 |
| 16 | + 6 |
| 17 | + 3 |
| 18 | ± 0 |
| EVA | + 18 |
| EVA-DIB | + 12 |

Wie ersichtlich, besitzen die Polymerisate eine sehr gute Fließfähigkeit.

**Patentansprüche**

1. Terpolymerisate, die außer Ethylen-Einheiten 5 bis 35 Gew.-% Vinylacetat und 1 bis 25 Gew.-% Neononansäurevinylester- oder Neodecansäurevinylester-Einheiten, d.h. solche Ester, die auf tertiären Carbonsäuren basieren, welche durch die Koch-Synthese aus Olefinen, CO und Wasser hergestellt werden, enthalten, eine im Dampfphasenosmometer unter Verwendung von Toluol als Lösungsmittel gemessene mittlere Molekularmasse ($\overline{M}_n$) von 500 bis 5000 g/mol und eine bei 140°C gemessene Schmelzviskosität von 20 bis 1000 mPa.s besitzen.

2. Verfahren zur Herstellung von Terpolymerisaten nach Anspruch 1, dadurch gekennzeichnet, daß Monomergemische, die außer Ethylen und gegebenenfalls einem Molekularmasseregler, 5 bis 40 Gew.-% Vinylacetat und 1 bis 30 Gew.-% Neononansäurevinylester bzw. Neodecansäurevinylester enthalten, bei Drücken zwischen 50 und 700 MPa und bei Temperaturen zwischen 100 und 350°C in Gegenwart eines Initiators polymerisiert werden.

3. Verfahren nach Anspruch 2, dadurch gekennzeichnet, daß man den Molekularmassenregler in einer Menge von 0,05 bis 10 Gew.-%, bezogen auf das Monomerengemisch, anwendet.

4. Verfahren nach Anspruch 2 oder 3, dadurch gekennzeichnet, daß der Molekularmassenregler Propionaldehyd ist.

5. Verwendung von Terpolymerisaten nach Anspruch 1 zur Verbesserung der Fließfähigkeit von Mineralöldestillaten.

6. Verwendung von Terpolymerisaten nach Anspruch 5, dadurch gekennzeichnet, daß ihre mittlere Molmasse 1.000 bis 3.000 g . mol$^{-1}$ ist.

7. Verwendung von Terpolymerisaten nach Anspruch 5 oder 6, dadurch gekennzeichnet, daß ihre bei 140°C gemessene Schmelzviskosität 25 bis 500 mPa.s beträgt.

8. Verwendung von Terpolymerisaten nach einem oder mehreren der Ansprüche 5 bis 7, dadurch gekennzeichnet, daß sie den Mineralöldestillaten in einer Menge von 0,001 bis 2 Gew.-%, bezogen auf das Destillat, zugesetzt werden.

9. Mineralöldestillate, die 0,001 bis 2 Gew.-% (bezogen auf Destillat) eines Terpolymerisats nach Anspruch 1 gelöst enthalten.

**Claims**

1. Terpolymers which, in addition to ethylene units, contain 5 to 35% by weight of vinyl acetate and 1 to 25% by weight of vinyl neononanoate or vinyl neodecanoate units, i.e. esters based on tertiary carboxylic acids which are produced by the Koch synthesis from olefins, CO and water, and which have an average molar mass ($\widetilde{M}_n$) of 500 to 5000 g . mol$^{-1}$ measured in a steam phase osmometer using toluene as the solvent and a melt viscosity of 20 to 1000 mPa.s measured at 140°C.

2. A process for preparing terpolymers according to claim 1, characterised in that monomer mixtures which, in addition to ethylene and, if appropriate, a molar mass regulator, contain 5 to 40% by weight of vinyl acetate and 1 to 30% by weight of vinyl neononanoate or vinyl neodecanoate are polymerised at pressures of 50 to 700 MPa and at temperatures of 100 to 350°C in the presence of an initiator.

3. A process according to claim 2, characterised in that the molar mass regulator is used in an amount of 0.05 to 10% by weight, related to the monomer mixture.

4. A process according to claim 2 or 3, characterised in that the molar mass regulator is propionaldehyde.

5. The use of terpolymers according to claim 1 for improving the fluidity of mineral oil distillates.

6. The use of terpolymers according to claim 5, characterised in that their average molar mass is 1,000 to 3,000 g . mol$^{-1}$.

7. The use of terpolymers according to claim 5 or 6, characterised in that their melt viscosity measured at 140°C is 25 to 500 mPa.s.

8. The use of terpolymers according to one or more of claims 5 to 7, characterised in that they are added to the mineral oil distillates in an amount of 0.001 to 2% by weight, related to the distillate.

9. Mineral oil distillates which contain 0.001 to 2% by weight (related to the distillate) of a dissolved terpolymer according to claim 1.

**Revendications**

1. Terpolymères, qui contiennent en dehors des unités d'éthylène 5 à 35 % en poids d'unités d'acétate de vinyle et 1 à 25 % en poids d'ester vinylique d'acide néononanoïque ou d'ester vinylique d'acide néodécanoïque, c'est-à-dire ces esters qui sont à base d'acides carboxyliques tertiaires, lesquels sont préparés par la synthèse-cuisson à partir d'oléfines, de CO et d'eau, qui présentent une masse moléculaire moyenne ($\overline{M}_n$) de 500 à 5 000 g/mol, mesurée dans un osmomètre à phase vapeur en utilisant du toluène en tant que solvant, et une viscosité de fusion mesurée à 140°C de 20 à 1 000 mPa.s

2. Procédé pour la préparation de terpolymères selon la revendication 1, caractérisé en ce qu'on polymérise des mélanges de monomères qui contiennent en dehors de l'éthylène et éventuellement d'un régulateur de masse moléculaire, 5 à 40 % en poids d'acétate de vinyle et 1 à 30 % en poids d'ester vinylique d'acide néononanoïque ou d'ester vinylique d'acide néodécanoïque, à des pressions comprises entre 50 et 700 MPa et à des températures comprises entre 100 et 350°C en présence d'un initiateur.

3. Procédé selon la revendication 2, caractérisé en ce qu'on utilise le régulateur de masse moléculaire dans une quantité de 0,05 à 10 % en poids rapportés au mélange de monomères.

4. Procédé selon la revendication 2 ou 3, caractérisé en ce que le régulateur de masse moléculaire est l'aldéhyde propionique.

5. Utilisation de terpolymères selon la revendication 1 pour l'amélioration de la fluidité de distillats d'huiles minérales.

6. Utilisation de terpolymères selon la revendication 5, caractérisée en ce que leur masse molaire moyenne est de 1 000 à 3 000 g.mol$^{-1}$.

7. Utilisation de terpolymères selon la revendication 5 ou 6, caractérisée en ce que leur viscosité de fusion mesurée à 140°C est de 25 à 500 mPa.s

8. Utilisation de terpolymères selon l'une quelconque ou plusieurs des revendications 5 à 7, caractérisée en ce qu'on les ajoute aux distillats d'huiles minérales dans une quantité de 0,001 à 2 % en poids rapportés au distillat.

9. Distillats d'huiles minérales qui contiennent 0,001 à 2 % en poids, (rapportés au distillat) d'un terpolymère selon la revendication 1 dissous.